# EUROPÄISCHE PATENTSCHRIFT

(11) **EP 0 556 552 B1**
(45) Veröffentlichungstag und Bekanntmachung des Hinweises auf die Patenterteilung: **19.03.1997**
(21) Anmeldenummer: 93100355.2
(22) Anmeldetag: 13.01.1993
(51) Int. Cl.: B29C 49/20, B60K 15/077

(54) **Verfahren zum Herstellen von Hohlkörpern aus thermoplastischem Kunststoff sowie Hohlkörper aus thermoplastischem Kunststoff**
Method for producing hollow bodies from thermoplastic material and hollow body of thermoplastic material
Procédé pour fabriquer des corps creux en matière synthétique thermoplastique ainsi que corps creux en matière synthétique thermoplastique

(30) Priorität: 08.02.1992 DE 4203705
(43) Veröffentlichungstag der Anmeldung: 25.08.1993
(73) Patentinhaber: KAUTEX WERKE REINOLD HAGEN AG, D-53229 Bonn (DE)
(72) Erfinder: Linden, Günter, W-5300 Bonn 3 (DE); Vogeley, Detlef, W-5330 Königswinter 21 (DE); Esser, Klaus, W-5330 Königswinter 1 (DE)
(74) Vertreter: Koepsell, Helmut, Dipl.-Ing.

(56) Entgegenhaltungen:
- EP-A- 0 176 044
- DE-A- 2 936 318
- DE-A- 3 042 926
- DE-A- 3 223 081
- US-A- 4 719 072

## Beschreibung

Die Erfindung betrifft ein Verfahren zum Herstellen von Hohlkörpern aus thermoplastischem Kunststoff durch Blasformen gemäß dem Oberbegriff des Anspruches 1 sowie einen mittels Blasformen hergestellten Hohlkörper gemäß dem Oberbegriff des Anspruches 28.

Das Anbringen von Zusatzkörpern im Inneren von im Blasverfahren hergestellten Hohlkörpern ist bekannt. In der Mehrzahl der Fälle wird dazu beim Extrudieren des Vorformlings letzterer über den von einem Tragelement gehaltenen Zusatzkörper geführt, worauf dann beim Schließen der im allgemeinen zweiteiligen Blasform um den Vorformling der Zusatzkörper innerhalb des zu diesem Zeitpunkt im allgemeinen bereits voraufgeweiteten Vorformlings eingeschlossen wird. Überwiegend sind derartige Vorformlinge schlauchförmig ausgebildet, so daß im folgenden ausschließlich von schlauchförmigen Vorformlingen gesprochen wird, ohne daß dadurch die Anwendung der Lehre gemaß der Erfindung auf in anderer Weise ausgebildete Vorformlinge ausgeschlossen sein soll. Nach dem Aufweiten des Vorformlings in die Gestalt des herzustellenden Hohlkörpers wird der Zusatzkörper mit der inneren Begrenzungsfläche der Wandung desselben verbunden. Dies geschieht im allgemeinen in der Weise, daß der Zusatzkörper mit der Wandung des Hohlkörpers verschweißt wird, wobei der Zusatzkörper zumindest teilweise aus Material besteht, welches mit dem den Hohlkörper bildenden Material verschweißbar ist. Die Herstellung einer solchen Schweißverbindung ist z. B. dann möglich, wenn Hohlkörper und Zusatzkörper an den Verbindungsstellen aus Polyolefinen, beispielsweise Polyethylen, bestehen. Dabei ist es erforderlich, daß im Augenblick des Herstellens der Verbindung zwischen Zusatzkörper und Hohlkörperwandung letztere noch heiß und plastisch, also in einem Zustand ist, der das Entstehen einer Schweißverbindung zuläßt (DE-A-32 23 081).

Typische Anwendungsfälle derartiger mit einem innen angebrachten Zusatzkörper versehene Hohlkörper sind Kfz-Tanks, die, soweit sie aus Kunststoff bestehen, überwiegend im Extrusions-Blasverfahren hergestellt werden. Bei dem Zusatzkörper kann es sich um einen Schwalltopf handeln, der bei im Kraftwagen montiertem Tank in dessen unterem Bereich angeordnet ist und insbesondere dafür sorgt, daß unabhängig von den auf den im Tank befindlichen Kraftstoff einwirkenden Kräften, z. B. Fliehkräften bei Kurvenfahrten, im Bereich der Ansaugöffnung für die Kraftstoffpumpe immer ausreichend Kraftstoff verfügbar ist. D. h., daß die Ansaugöffnung für die Zuleitung zur Pumpe im allgemeinen sich im Schwalltopf befindet, der im wesentlichen aus einem Boden und von diesem ausgehenden, im allgemeinen senkrecht zum Boden verlaufenden Wandbereichen besteht, die jedoch mit Durchgängen für den Kraftstoff versehen sind. An seiner dem Boden abgekehrten Seite ist der Schwalltopf im allgemeinen offen. Derartige Schwalltöpfe sind bekannt.

Da die Wandungen von Kraftstofftanks, die aus einem Polyolefin, insbesondere Polyethylen bestehen, jedenfalls für solche Kohlenwasserstoffe, die in flüssigen Kraftstoffen enthalten sind, permeabel sind, ist es üblich, die Wandung von Kraftstoffbehältern vor deren Verwendung einem reaktiven Gas auszusetzen. Im allgemeinen handelt es sich dabei um ein Fluor enthaltendes Gasgemisch, welches in den Hohlkörper eingeblasen wird und zu einer Umsetzung der inneren Oberflächenschicht der Wandung aus Polyethylen oder dergleichen führt mit dem Ergebnis, daß diese Oberflächenschicht und damit die Wandung insgesamt für Kohlenwasserstoffe nahezu undurchlässig, jedenfalls so wenig durchlässig wird, daß die noch hindurchtretenden Kohlenwasserstoffe quantitativ nicht ins Gewicht fallen (EP-A-0 176 044).

Bei bekannten Verfahren der einleitend beschriebenen Art wird im allgemeinen so vorgegangen, daß nach dem Aufweiten zunächst der Zusatzkörper mit der Wandung des Hohlkörpers verbunden wird, worauf dann das Fluorieren oder eine andere die Permeabilität für Kohlenwasserstoffe herabsetzende Behandlung durchgeführt wird. Dies hat zur Folge, daß der Bereich der inneren Oberfläche der Wandung, an welchem der Zusatzkörper angebracht ist, durch letzteren gegenüber dem Reaktionsmedium abgeschirmt wird mit dem Ergebnis, daß in diesem während der Behandlung mit dem Reaktionsmedium abgeschirmten Bereich keine oder nur eine geringe Umsetzung der Oberflächenschicht der Wandung des Hohlkörpers erfolgt. Dieser nachteilige Effekt könnte möglicherweise in einigen Teilbereichen, also dort, wo der Zusatzkörper nicht an der Wandung anliegt, durch eine längere Einwirkungszeit des Reaktionsmediums vermieden werden. Dies würde jedoch zu einer längeren Behandlungsdauer mit entsprechend geringerer Produktivität führen.

Die bekannten Verfahren weisen insbesondere bei Verwendung der üblichen Schwalltöpfe in Kfz-Tanks Nachteile auf, da erstere im allgemeinen mit einem großflächigen Boden versehen sind, der direkt an der inneren Oberfläche der Hohlkörperwandung anliegt und somit einen entsprechend großen Bereich derselben abdeckt und durch das Reaktionsmedium unbehandelt läßt. Dieser unbehandelt bleibende Bereich der Hohlkörperwandung führt zwar nicht zwangsläufig zu einer Durchlässigkeit für Kohlenwasserstoffe, die die Verwendung des Kohlkörpers als Tank ausschließen würde, zumal durch das Vorhandensein des Bodens des Schwalltopfes in diesem Bereich die dort insgesamt vorhandene Wandung - Wandung des Hohlkörpers plus Boden des Schwalltopfes - dicker ist als in den übrigen Bereichen des Tanks. Jedoch führt die in diesem Bereich fehlende Oberflächenbehandlung dazu, daß im Laufe der Zeit bei der Benutzung des Tanks Kohlenwasserstoffe aus dem Kraftstoff in diesen Bereich der Wandung des Tanks eindringen. Dies hat unter anderem zur Folge, daß die von den Kohlenwasserstoffen durchsetzten Bereiche der Wandung z. B. durch Quellen eine gewisse Deformation erfahren. Das Ausmaß dieser Deformation braucht nicht sehr groß zu sein. Es bewirkt jedoch in jedem Fall z. B. das Auftreten von Spannungen in der Wandung, die unerwünscht sind und zudem zu Verformungen von Wandungsbereichen führen können, die sich bis auf den Zusatzkörper unter Veränderung der Position desselben im Tank auswirken können, so daß im Zusatzkörper befindliche Bauteile unter Umständen in einer ihre Funktion beeinträchtigenden Weise beeinflußt werden. Selbstverständlich werden die Kohlenwasserstoffe auch in die Boden- und Wandungsbereiche eines z.B. aus Polyethylen bestehenden Schwalltopfes eindringen und dort ebenfalls ein Quellen dieser Teile bewirken. Dies ist jedoch beim Schwalltopf ohne Bedeutung, da er keine großen mechanischen Beanspruchungen erfährt und außerdem innerhalb des Tankes angeordnet ist. Zwar wirkt das Reaktionsmedium, mit dem die innere Oberfläche des Tankes behandelt wird, auch auf den Schwalltopf - oder irgendeinen anderen innerhalb des Hohlkörpers befindlichen Zusatzkörper - ein, ohne allerdings dabei die Wirkungen auf den Oberflächen des Zusatzkörpers zu erzielen, die an der inneren Oberfläche des Hohlkörpers eintreten. Dies ist im wesentlichen darauf zurückzuführen, daß der Zusatzkörper eine wesentlich niedrigere Temperatur aufweist als die noch plastische und somit heiße Wandung des Hohlkörpers. Die Temperatur der auf die beschriebene Weise zu behandelnden Oberflächen stellt eine wesentliche Voraussetzung für das Eintreten des angestrebten Effektes dar.

Der Erfindung liegt die Aufgabe zugrunde, Verfahren und Hohlkörper der einleitend beschriebenen Art so abzuwandeln bzw. auszugestalten, daß die vorbeschriebenen Nachteile vermieden werden. Es soll einerseits wie beim Stand der Technik möglich sein, Zusatzkörper innen an im Blasverfahren hergestellten Hohlkörpern, also beispielsweise Schwalltöpfe an Kraftstofftanks, anzubringen, ohne daß dabei bezüglich Materialauswahl, Positionierung usw. irgendwelche Besonderheiten zu beachten wären. Das Verfahren soll auf üblichen und vorhandenen Maschinen ausführbar sein. Der fertige Hohlkörper soll bezüglich des Einbaus, seiner Verwendbarkeit usw. keinen Einschränkungen unterliegen, die bei bekannten derartigen Hohlkörpern nicht zu beachten wären. Insbesondere soll die Produktivität des Verfahrens nicht abnehmen. Ein ggf. in Betracht kommender Mehraufwand soll so gering sein, daß er im Vergleich zu dem angestrebten und erzielten Effekt kaum ins Gewicht fällt.

Diese Aufgabe wird mit den im Kennzeichen des Anspruches 1 bzw. des Anspruches 28 angegebenen Merkmalen gelöst.

Das Verfahren gemäß der Erfindung läßt sich dahingehend zusammenfassen, daß vor der Behandlung des Hohlkörpers mit dem Reaktionsmedium lediglich eine Halterung an der Innenwandung angebracht wird, die den Zusatzkörper trägt, der jedoch zunächst in einem Abstand von dem Wandbereich des Hohlkörpers, mit dem er zu verbinden ist, gehalten wird, so daß das Behandlungsgas auch in den Bereich zwischen Zusatzkörper und Wandung eintreten kann, der später vom Zusatzkörper ganz oder teilweise abgedeckt oder doch zumindest abgeschirmt ist. Erst nach ausreichender Behandlung mit dem Reaktionsmedium wird der Zusatzkörper relativ zur Halterung in seine Endposition verschoben und in dieser in geeigneter Weise fixiert. Zwar sind auch beim Verfahren gemäß der Erfindung am fertigen Hohlkörper Wandbereiche vorhanden, die innenseitig durch die mit diesen Bereichen verbundenen Teile der Halterung während der Behandlung mit dem Reaktionsmedium abgedeckt sind, so daß dort keine oder nur geringere Umsetzungen mit dem Reaktionsmedium stattfinden. Diese Bereiche haben jedoch eine geringe Flächenausdehnung, so daß die durch das Eindringen von Kohlenwasserstoffen in diesen Bereichen bewirkten Quellungen des Materials ohne merklichen Einfluß auf die Qualität des fertigen Hohlkörpers, also beispielsweise eines Kraftfahrzeugtanks, bleiben.

Bei Anwendung des Verfahrens gemäß der Erfindung wird eine feste direkte Verbindung zwischen Zusatzkörper und Wandung des Hohlköpers selbst dann nicht eintreten, wenn das Verschieben aus der ersten in die Endposition zu einem Zeitpunkt erfolgt, in welchem die Wandung des Hohlkörpers noch warmplastisch ist, da durch die zuvor erfolgte Behandlung mit dem Reaktionsgas eine Schweißverbindung und im allgemeinen auch eine Adhäsionsverbindung zwischen Hohlkörperwandung und Zusatzkörper jedenfalls nicht mit der erforderlichen Festigkeit hergestellt werden können. Dies ist jedoch nicht erforderlich, da die Halterung ohne weiteres so ausgebildet und an der Hohlkörperwandung angebracht werden kann, daß eine feste Verbindung zwischen dieser und der Wandung entsteht, so daß es nur noch darauf ankommt, den Zusatzkörper in seiner Endposition in ausreichend zuverlässiger Weise an der Halterung zu fixieren.

Ein weiterer wesentlicher Vorteil der Erfindung besteht darin, daß die Wahl des Materials für den Zusatzkörper keinerlei Beschränkungen unterliegt, da der Zusatzkörper nicht mehr direkt mittels Schweißen, Heißkleben oder dergleichen an der Wandung des Hohlkörpers befestigt wird, sondern von der Halterung getragen wird und mit dieser nur in geeigneter Weise mechanisch verbunden zu werden braucht. Es ist also beispielsweise ohne weiteres möglich, einen Kraftstofftank aus Kunststoff mit einem Schwalltopf aus Stahlblech zu versehen.

Weiterhin besteht bei Anwendung des Verfahrens gemäß der Erfindung keine Notwendigkeit, den Zusatzkörper in seiner Endposition in direkter Anlage an der Wandung des Hohlkörpers zu positionieren. Vielmehr ist auch eine Endposition möglich, in der sich der Zusatzkörper in einem geringen Abstand von der Wandung befindet, wenngleich die erstgenannte Möglichkeit häufig die zweckmäßigere sein wird.

Die Verschiebung des Zusatzkörpers aus seiner ersten Position in die zweite Position kann erfolgen, solange sich der Hohlkörper in der noch geschlossenen Blasform befindet. Es ist aber auch möglich, diese Verschiebung zu einem Zeitpunkt durchzuführen, zu welchem der Hohlkörper bereits aus der Blasform herausgenommen worden ist und z.B. Komplettierungsarbeiten an ihm durchgeführt werden. Dabei ist es in vielen Fällen, insbesondere bei Kraftstofftanks, erforderlich, den Hohlkörper mit einer zusätzlichen Öffnung zu versehen. Es bietet sich an, die Verschiebung des Zusatzkörpers dann durchzuführen, nachdem diese zusätzliche Öffnung angebracht worden ist, die zudem bei Kraftstofftanks häufig etwa gegenüber dem Schwalltopf anzubringen ist oder angebracht werden kann.

Weitere mögliche Ausgestaltungen der Erfindung sind in den Unteransprüchen angeführt.

In den Zeichnungen sind einige derzeit bevorzugte Ausführungsbeispiele der Erfindung im Schema dargestellt. Es zeigen
- Fig. 1 - 3: jeweils in Seitenansicht, teilweise im Schnitt, eine Vorrichtung zum Herstellen von Hohlkörpern in drei aufeinanderfolgenden Verfahrensstadien,
- Fig. 4: einen Ausschnitt aus Fig. 3 in größerem Maßstab,
- Fig. 5: eine der Fig. 4 entsprechende Ansicht, jedoch mit dem Zusatzkörper in der Endposition,
- Fig. 6: die dazugehörige Draufsicht,
- Fig. 7: eine der Fig. 4 entsprechende Darstellung einer zweiten Ausführungsform,
- Fig. 8: die dazugehörige Draufsicht,
- Fig. 9: eine der Fig. 4 entsprechende Ansicht einer dritten Ausführungsform,
- Fig. 10: eine dazugehörige perspektivische Ansicht des Zusatzkörpers,
- Fig. 11-14: jeweils in Seitenansicht, teilweise im Schnitt, eine den Fig. 1 - 3 entsprechende Darstellung einer weiteren Vorrichtung zum Herstellen von Hohlkörpern in vier aufeinanderfolgenden Verfahrensstadien.

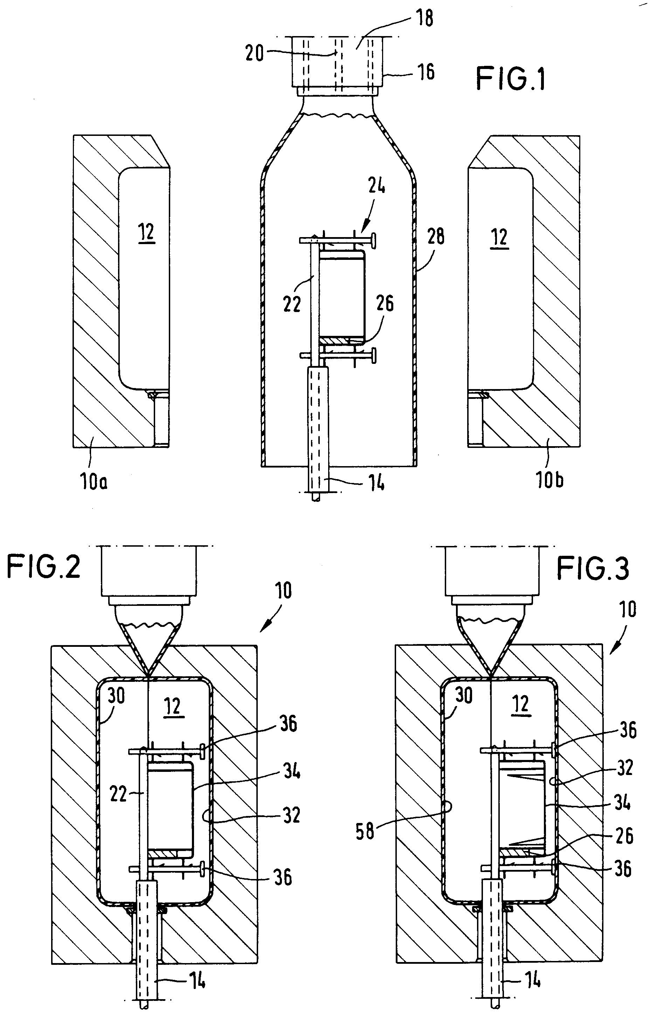

Eine Vorrichtung zur Durchführung des Verfahrens nach der Erfindung kann gemäß den Darstellungen der Fig. 1 - 3 eine im allgemeinen zweigeteilte Blasform 10 aufweisen, der ein zwischen die beiden Blasformhälften 10a, 10b von unten in das Formnest 12 hineinragender Dorn 14 zugeordnet ist.

Die Vorrichtung weist weiterhin eine Extrusionsvorrichtung mit einem Extrusionskopf 16 auf, der bei Herstellung eines schlauchförmigen Vorformlings mit einer ringförmigen Austrittsöffnung für das thermoplastische Material versehen ist. Diese ringförmige Austrittsöffnung ist innenseitig durch einen Kern 18 begrenzt, der mit einem nach unten offenen Kanal 20 für ein gasförmiges Medium versehen ist.

Der Dorn 14 kann mit in der Zeichnung nicht dargestellten axialen Kanälen versehen sein, die z. B. zueinander koaxial angeordnet sind, von denen der eine Kanal der Zuführung eines Druckmediums und der andere Kanal der Zuführung des Reaktionsgases dient. Dazu wird z.B. auf die EP-OS 0 176 044 und auf die entsprechende US-PS 4,617,077 verwiesen, die Einzelheiten des Blasverfahrens und auch von Möglichkeiten bezüglich der mit Zuführung von Aufweitmedium und Reaktionsgas zusammenhängenden Dinge beschreiben und zeigen.

Der Dorn 14 ist an seinem in die Blasform hineinragenden Ende mit einem stangenartigen Fortsatz 22 versehen, der jedoch einen merklich kleineren Durchmesser aufweist als der Dorn 14. Dieser Fortsatz 22 ist auf dem Dorn 14, parallel zu diesem verlaufend, exzentrisch angeordnet, so daß eine Rotation des drehbar gelagerten Dornes 14 um seine Längsachse eine entsprechende Verschwenkung des Fortsatzes 22 um die Längsachse des Dornes 14 zur Folge hat. Der Fortsatz 22 dient während der Herstellung eines Erzeugnisses als Tragelement für eine Halterung 24, die ihrerseits einen Zusatzkörper 26 trägt, der an dem in der Blasform 10 herzustellenden Hohlkörper anzubringen ist.

Der Arbeitszyklus zur Herstellung eines Hohlkörpers beginnt bei geöffneter Blasform (Fig. 1) mit dem im einzelnen noch zu beschreibenden Aufstecken der Halterung 24 auf dem als Tragelement dienenden stangenartigen Fortsatz 22, wobei die Teile zunächst die in Figur 1 dargestellte Position einnehmen. D. h., daß der Dorn 14 zuvor in eine Position gedreht worden ist, in welcher sich das stangenartige Tragelement 22 im - auf die Fig. 1 - 3 bezogen - linken Scheitelpunkt der Kreisbahn befindet, die er bei einer Drehung des Dornes 14 um 180° beschreiben würde. In diesem Stadium des Verfahrens, d.h. bei auseinanderbewegten Blasformhälften 10a, 10b wird zwischen letztere nunmehr ein Vorformling 28 aus dem Extrusionskopf 16 extrudiert, der an seinem unteren Ende offen ist. Der Vorformling 28 ist schlauchförmig ausgebildet. Er kann aber auch in anderer Weise ausgebildet sein, beispielsweise aus einem im Querschnitt etwa U-förmig gebogenen Band oder auch aus zwei Bändern bestehen, die beim Schließen der Blasform 10 miteinander verbunden werden.

Fig. 1 läßt erkennen, daß der Vorformling 28 einen Durchmesser aufweist, der es erlaubt, ihn während des Extrusionsvorganges relativ über die vom Fortsatz 22 getragene Halterung 24 mit Zusatzkörper 26 zu führen. Während des Extrudierens des Vorformlings 28 wird normalerweise ein Gas durch den Kanal 20 in den Vorformling eingeführt, durch welches dieser eine gewisse Voraufweitung erfahren kann, wenngleich der im Vorformling 28 dabei vorhandene Überdruck aufgrund der Tatsache, daß der Vorformling unten offen ist, gering ist. Sobald der Vorformling 28 seine für die Herstellung eines Hohlkörpers erforderliche Länge erreicht hat, die etwa der in Fig. 1 dargestellten Länge entspricht, wird die Blasform 10 durch entsprechendes Verschieben der beiden Blasformhälften 10a, 10b aus den Positionen gemäß Fig. 1 in die gemäß den Figuren 2 und 3 geschlossen. Dabei wird der Vorformling 28 an seinem oberen Ende durch die beiden Blasformhälften 10a, 10b von dem noch am Extrusionskopf 16 hängenden Material abgequetscht und dabei verschlossen. Am unteren Ende wird der Vorformling um den Dorn 14, ggf. unter Abquetschen von Überschußmaterial, gepreßt. Dabei handelt es sich um Dinge, die jedem Fachmann auf dem Gebiet des Extrusions-Blasformens geläufig sind, so daß sie hier nicht gesondert erläutert zu werden brauchen.

Kurz vor oder nach Beendigung des Schließens der Blasform 10 wird mit dem eigentlichen Blasvorgang begonnen. Dazu wird zunächst Inertgas über einen der im Dorn 14 befindlichen Kanäle unter Druck in den ggf. bereits voraufgeweiteten Vorformling 16 eingeführt mit dem Ergebnis, daß der Vorformling überall zur Anlage an der Wandung des Formnestes 12 gebracht wird und somit dessen Gestalt annimmt, die im wesentlichen der Gestalt des herzustellenden Hohlkörpers 30 entspricht. Fig. 2 der Zeichnung läßt erkennen, daß aufgrund der gewählten Position des Dornes 14 in Umfangsrichtung die Halterung 24 und damit der von dieser getragene Zusatzkörper 26 sich in diesem Verfahrensstadium in einem Abstand von - bezogen auf die Darstellungen der Fig. 2 und 3 - rechten Wandbereich 32 des Hohlkörpers 30 befinden, an welchem der Zusatzkörper 26 angebracht werden soll. Der Abstand zwischen dem Boden 34 des topfförmigen Zusatzkörpers 26 und dem Wandbereich 32 ist dabei so groß, daß ein innerhalb des Hohlkörpers 30 befindliches Behandlungsmedium jederzeit ungehindert Zutritt auch zu diesem Wandbereich 32 hat. Von den übrigen Wandbereichen ist der Abstand des Zusatzkörpers 26 ohnehin so groß, daß ein innerhalb des Hohlkörpers 30 strömendes Medium überall ungehindert Zutritt hat.

Möglichst sofort nach Beendigung des Aufweitvorganges wird der Dorn 14 um seine Längsachse um 180° gedreht. Dies hat eine entsprechende Verschwenkung des als Tragelement für Halterung 24 und Zusatzkörper 26 dienenden stangenartigen Fortsatzes 22 zur Folge mit dem Ergebnis, daß im Zuge dieser Schwenkbewegung Halterung 24 mit Zusatzkörper 26 aus der Position gemäß Fig. 2 in die gemäß Fig. 3, also nach rechts verschoben wird. Die Exzentrizität des Fortsatzes 22 gegenüber dem Dorn 14 ist dabei so gewählt, daß am Ende der Schwenkbewegung die dem Wandbereich 32 zugekehrten verbreiterten Fußteile 36 der Halterung 24 mit dem Wandbereich 32 unter einem gewissen Druck in Berührung kommen und damit unter Bildung einer festen Verbindung zwischen Halterung 24 und Wandbereich 32 verschweißt werden. Diese die feste Verbindung zwischen Wandbereich 32 und Halterung 24 bewirkende Position der letzteren ist in Fig. 3 dargestellt. Da die Halterung 24 mit dem Zusatzkörper 26 bei der vom Fortsatz 22 durchgeführten Schwenkbewegung immer Positionen einnehmen soll, die parallel zu einer Ebene verlaufen, die durch die in Fig. 2 dargestellte Ausgangsposition von Halterung 24 und Zusatzkörper 26 definiert ist, ist der stangenartige Fortsatz 22 um seine Längsachse relativ zum Dorn 14 drehbar in letzterem gelagert, wobei in der Zeichnung nicht dargestellte Mittel vorgesehen sind, die die Winkelstellung des Fortsatzes 22, bezogen auf seine Längsachse, fixieren. D. h., daß die Winkelposition des Fortsatzes 22 und damit der Halterung 24 sowie des von ihr getragenen Zusatzkörpers während der Schwenkbewegung des Fortsatzes 22 unverändert bleiben, welche Tatsache zu der bereits erwähnten Verschiebung führt, bei welcher Halterung und Zusatzkörper immer eine Position einnehmen, die parallel zu ihrer Ausgangsposition verläuft.

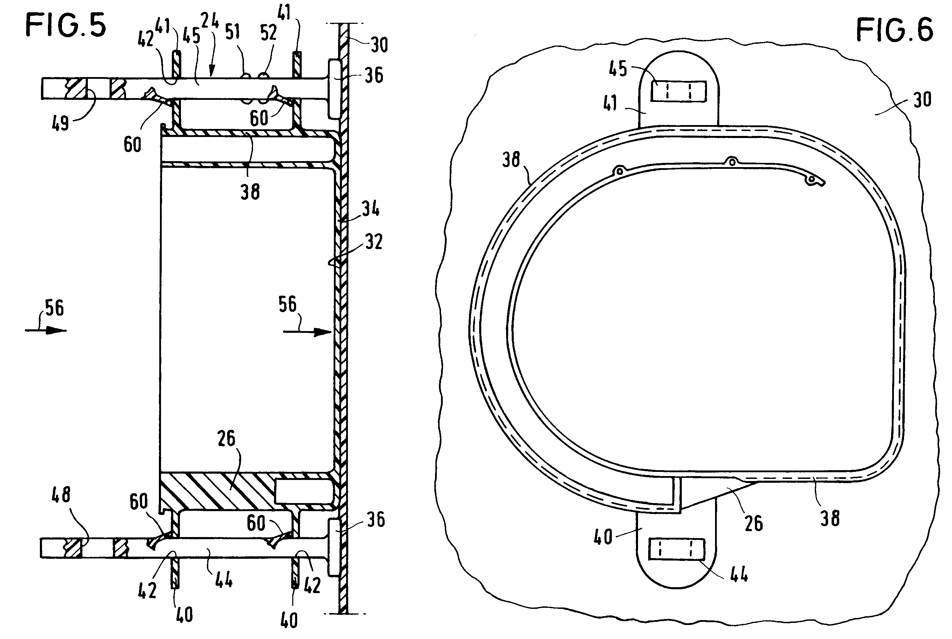

Nach Herstellung der Verbindung zwischen Halterung 24 und der Wandung des Hohlkörpers 30 im Bereich 32 derselben wird dann über den Dorn 14 - oder eine andere Zuführung - das Behandlungsmedium in den Hohlkörper 30 eingeblasen, welches zu der bereits erwähnten Umsetzung der inneren Oberfläche der Wandung führt. Fig. 3 der Zeichnung läßt erkennen, daß der Zusatzkörper 26 auf allen Seiten so weit von der Wandung des Hohlkörpers 30 entfernt ist, daß das Behandlungsgas zu sämtlichen Wandbereichen, insbesondere auch zum Wandbereich 32, der dem Boden 34 des Zusatzkörpers 26 gegenüberliegt, ungehindert Zutritt hat. Nach Beendigung der Behandlung wird dann der als Schwalltopf ausgebildete Zusatzkörper 26 aus der Position gemäß Fig. 3 in die Position gemäß Fig. 5 verschoben, in welcher der Boden 34 des Schwalltopfes im Bereich 32 an der Wandung des Hohlkörpers anliegt. Dies kann innerhalb oder außerhalb der Blasform erfolgen.

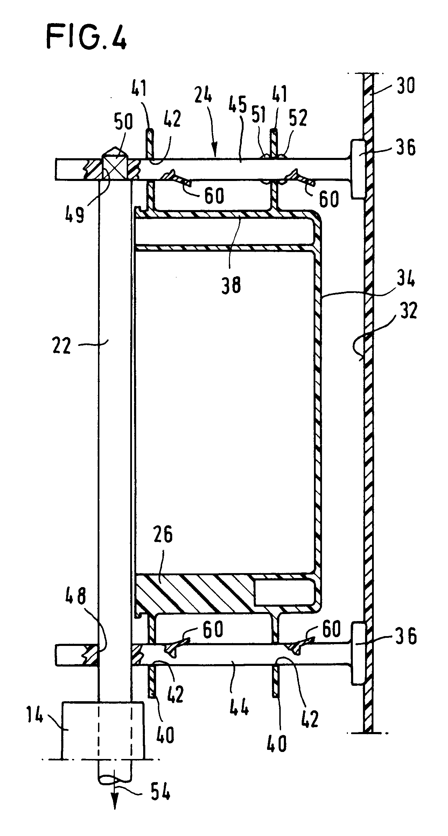

Die Figuren 4 - 6 zeigen Einzelheiten der Ausgestaltung von Halterung 24 und Zusatzkörper 26. Letzterer weist den bereits erwähnten Boden 34 sowie Seitenwände 38 und innerhalb des Topfes befindliche Einbauten auf, die jedoch für die Erfindung ohne Bedeutung sind und von den jeweiligen Erfordernissen und Gegebenheiten abhängen.

An zwei etwa einander gegenüberliegenden Seiten ist der Zusatzkörper 26 mit jeweils zwei Fortsätzen 40, 41 versehen, die etwa parallel zum Boden 34 und zum Wandungsbereich 32 verlaufen und Öffnungen 42 aufweisen.

Die Fortsätze 40, 41 mit den Öffnungen 42 dienen als Führungsmittel für den Zusatzkörper 26 an der Halterung 24, die im wesentlichen aus zwei Ständern 44, 45 besteht, die im wesentlichen senkrecht zum Wandbereich 32 des Hohlkörpers 30 verlaufen. Die Ständer 44, 45 weisen, wie dies insbesondere die Fig. 6 erkennen läßt, einen im wesentlichen rechteckigen Querschnitt auf. An ihrem dem Wandbereich 32 des Hohlkörpers zugekehrten Ende sind sie mit fußartigen Verbreiterungen 36 versehen. Die dem Wandbereich 32 zugekehrten Begrenzungsflächen der verbreiterten, etwa plattenförmigen Fußteile 36 werden am Ende der vorstehend beschriebenen Bewegung der Teile aus der Position gemäß Fig. 2 in die der Fig. 3 gegen die noch heiße und somit plastische innere Begrenzungsfläche des Wandbereiches 32 zwecks Herstellung einer Schweißverbindung gedrückt.

In dem der fußartigen Verbreiterung 36 abgekehrten Endbereich jedes Ständers 44, 45 ist eine Durchbrechung 48 bzw. 49 vorgesehen, von denen die Durchbrechung 48 im Querschnitt kreisrund und dem ebenfalls über den größten Teil seiner Längserstreckung im Querschnitt kreisrunden Fortsatzes 22 angepaßt ist. Der Endabschnitt 50 des stangenartigen Fortsatzes 22 hingegen weist einen formschlüssigen, hier quadratischen Querschnitt auf, an den die Durchbrechung 49 im Ständer 45 angepaßt ist. Dieser quadratische Querschnitt von Durchbrechung 49 und Endabschnitt 50 bewirkt einen Formschluß, der eine Schwenkbewegung der aus den beiden Ständern 44, 45 bestehenden Halterung 24 um die Längsache des Fortsatzes 22 verhindert.

Die Halterung 24 wird mit dem Zusatzkörper 26 zunächst in der Weise verbunden, daß die beiden Ständer 44, 45 durch die Löcher 42 der jeweils zugehörigen Fortsätze 40, 41 gesteckt werden, und zwar derart, daß die Teile die in Fig. 2 - 4. dargestellte relative Lage zueinander einnehmen. Danach wird die aus Halterung 24 und Zusatzkörper 26 bestehende Einheit auf den als Tragelement dienenden stangenartigen Fortsatz 22 aufgesteckt, so daß sich im Ergebnis die in den Figuren 1 und 2 dargestellte Lage der Teile ergibt.

Fig. 4 und 5 lassen erkennen, daß der Ständer 45 in Höhe des nahe dem Boden 34 befindlichen Fortsatzes 41 mit kleinen, abgerundeten Vorsprüngen 51, 52 versehen ist, die in der Position der Teile gemäß Fig. 2 - 4 einen Fortsatz 41 zwischen sich aufnehmen und diesen gegen Verschieben relativ zum Ständer 45 solange sichern, wie keine allzu große Kraft, die entsprechend gerichtet ist, auf Ständer 45 und/oder Zusatzkörper 26 einwirkt. Da jedenfalls der Ständer 45 normalerweise aus thermoplastischem Kunststoff bestehen wird, ist das die noppenartigen Vorsprünge 51, 52, die mit dem Ständer 45 einstückig sind, bildende Material elastisch verformbar, so daß insbesondere dann, wenn auch der Fortsatz 41 aus Kunststoff besteht, der Ständer 45 mit den Vorsprüngen 51, 52 durch das Loch im Fortsatz 41 geführt werden kann, wobei lediglich eine etwas größere Kraft aufzuwenden ist, um den durch die Vorsprünge 51 bewirkten Widerstand unter entsprechender Verformung der Vorsprünge 51 und/oder des Fortsatzes 41 zu überwinden. Dies gilt auch für die als Verriegelungsmittel für den Zusatzkörper dienenden Spreizelemente 60. Nach Aufstecken der aus Halterung 24 und Zusatzkörper 26 bestehenden Einheit auf das Tragelement 22 bleibt dann die relative Position zwischen Halterung 24 und Zusatzkörper 26 aufrechterhalten, so daß auch nach Verbinden der beiden Ständer 44 und 45 der Halterung 24 mit dem Wandbereich 32 des Hohlkörpers zunächst der Zusatzkörper 26 in der in den Figuren 3 und 4 dargestellten Lage gehalten wird. Sobald die Verbindung zwischen den beiden Ständern 44 und 45 einerseits und dem Wandbereich 32 des Hohlkörpers 30 andererseits fest genug ist, welcher Zustand nach entsprechender Abkühlung des Hohlkörpers 30 innerhalb der Blasform 10 eintritt, kann der als Tragelement dienende Fortsatz 22 durch eine entsprechende axiale Bewegung aus den beiden Ständern 44, 45 der Halterung 24 in Richtung des Pfeiles 54 zurückgezogen werden. Wann der Dorn 14 aus der Blasform 10 und damit aus dem Hohlkörper 30 herausgezogen werden kann, hängt unter anderem auch davon ab, ob das für die Behandlung der inneren Oberfläche der Wandung erforderliche Gas durch den Dorn 14 oder durch eine andere Zuführeinrichtung, beispielsweise durch den Kanal 20, in den Hohlkörper eingeblasen bzw. wieder ausgespült wird.

Nach erfolgter Behandlung wird der Zusatzkörper 26 in Richtung des Pfeiles 56 aus der in Fig. 3 und 4 dargestellten Lage in die Position gemäß Fig. 5 verschoben, in welcher der Boden 34 des Zusatzkörpers am Wandbereich 32 mehr oder weniger eng anliegt. Dies geschieht im allgemeinen, nachdem der ausreichend abgekühlte Hohlkörper 30 aus der Blasform 10 herausgenommen worden ist, die dazu wieder geöffnet worden ist, so daß die Blasformteile 10a, 10b die Positionen gemäß Fig. 1 einnehmen. Bei Kraftstofftanks ist es im allgemeinen erforderlich, in den dem Wandbereich 34 gegenüberliegenden Wandbereich 58 (Fig. 3) eine Öffnung zu schneiden, durch die der Zusatzkörper 26 leicht zugänglich ist. Zur Durchführung der Verschiebung in Richtung des Pfeiles 56 ist wiederum eine Kraft aufzuwenden, die ausreicht, um den Widerstand der Vorsprünge 52 und der Verriegelungselemente 60 am Ständer 45 zu überwinden.

Um den Zusatzkörper 26 in seiner in Fig. 5 dargestellten zweiten Position, die seine Endposition darstellt, zu sichern, sind an beiden Ständern 44, 45 die widerhakenähnlichen, verformbaren Verriegelungselemente 60 angebracht. Die Figuren 4 und 5 der Zeichnung, auf die bezüglich der konkreten Ausgestaltung dieser Verriegelungselemente 60 verwiesen wird, lassen erkennen, daß beim Verschieben des Zusatzkörpers 26 in Richtung des Pfeiles 56 diese Vorsprünge die Bewegung des Zusatzkörpers 26 aus der ersten Position in die zweite Position nicht behindern. Dabei erfolgt ggf. ähnlich wie im Falle der Vorsprünge 51, 52 auch eine gewisse elastische Verformung, wobei die Vorsprünge 60, die ebenfalls einstückig mit dem jeweiligen Ständer 44 bzw. 45 sein können, auch eine gewisse Verschwenkung erfahren. Nachdem die Fortsätze 40, 41 die Vorsprünge 60 der Ständer 44, 45 passiert haben und der Zusatzkörper seine Endposition erreicht hat, wirken die wieder ihre ursprüngliche Position einnehmenden Vorsprünge 60 als Anschläge, die den Zusatzkörper in seiner Endposition sichern.

Abweichend von der in den Figuren 1 - 6 dargestellten Ausführung können auch andere Mittel vorgesehen sein, um den Zusatzkörper in seiner jeweiligen Position an den Ständern 44, 45 zu sichern. Dies kann ggf. auch über Reibungskräfte erfolgen, wobei dann die Querschnittsabmessungen wenigstens eines der beiden Ständer 44, 45 entsprechend an die Abmessungen der Löcher 42 in den als Führungsmittel dienenden Fortsätzen 40, 41 anzupassen wären. Die Vorsprünge 60 können ebenfalls einstückig an den Ständern 44, 45, beispielsweise im Spritzgießverfahren, angeformt werden. Entsprechendes gilt auch für die Vorsprünge 51, 52.

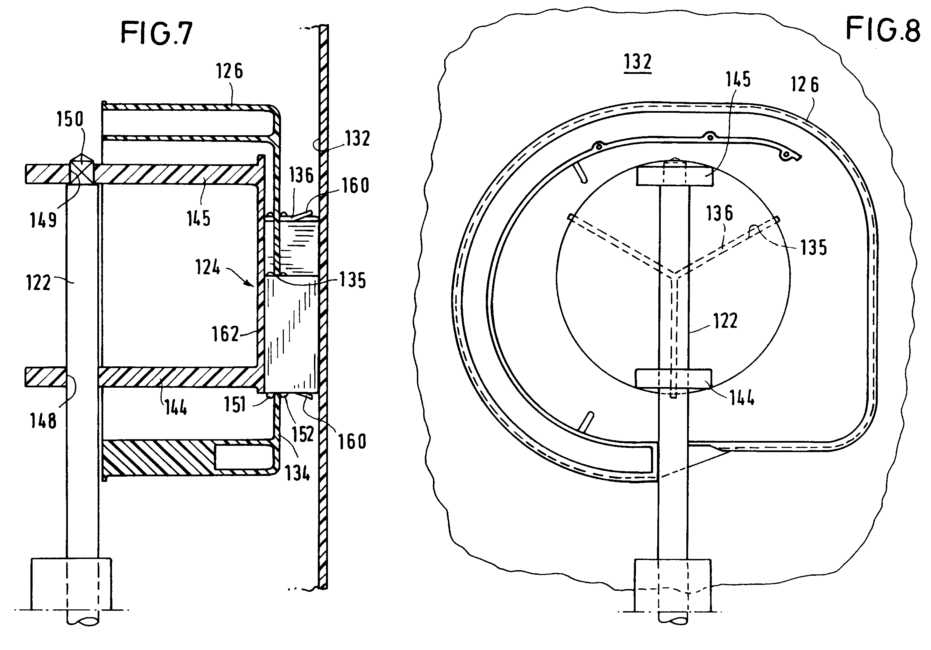

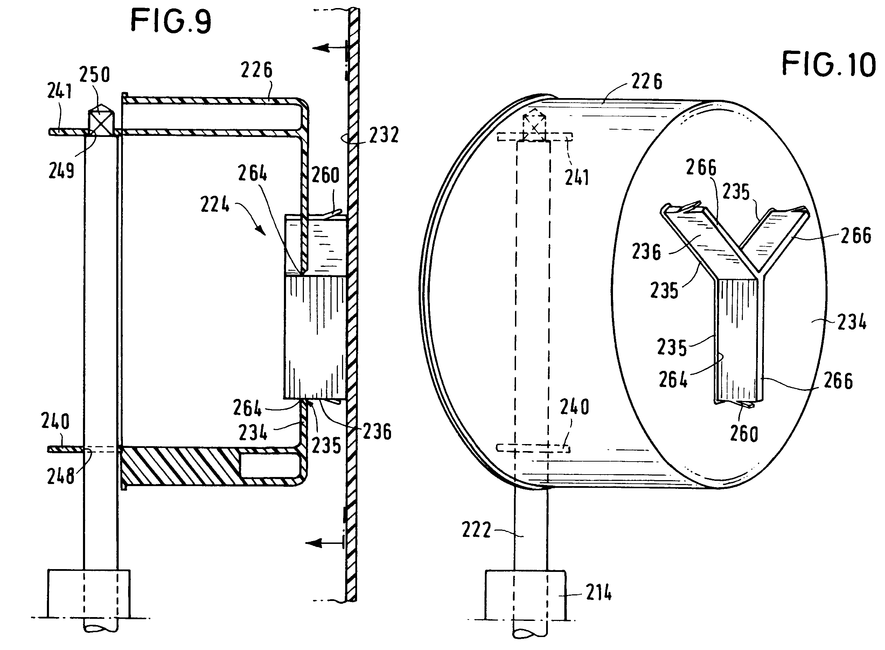

Beim Ausführungsbeispiel gemäß den Fig. 1 - 6 ist die Halterung 24 zweistückig, da sie aus den beiden Ständern 44, 45 besteht, die unabhängig voneinander mit dem Zusatzkörper 26 verbunden werden und sich außerhalb desselben befinden. Demgegenüber ist beim Ausführungsbeispiel gemäß den Figuren 7 und 8, in denen Teile, die denen des Ausführungsbeispiels gemäß den Figuren 1 - 6 entsprechen, mit gleichen, jedoch um 100 höheren Bezugszeichen versehen sind, die Halterung 124 mit einem sternförmigen Fußteil 136 versehen, an dessen dem stangenförmigen Tragelement 122 zugekehrten Seite eine Platte 162 befestigt ist, die von den beiden Ständern 144, 145 getragen wird. Letztere sind in der bereits beschriebenen Weise ausgebildet und auf das Tragelement 122 aufsteckbar. Im Gegensatz zur Ausführungsform gemäß den Figuren 1 - 6 befinden sich jedoch die beiden Ständer 144, 145 innerhalb des Zusatzkörpers 126. Demzufolge besteht die Notwendigkeit, den Boden 134 des als Schwalltopf ausgebildeten Zusatzkörpers 126 mit einer Durchbrechung 135 zu versehen, die entsprechend der sternförmigen Ausgestaltung des Fußteiles 136 zweckmäßigerweise ebenfalls sternförmig ist. Der Vorteil dieser sternförmigen Ausgestaltung besteht darin, daß die Kontaktflächen (vgl. Kontaktflächen 266 in Fig. 10) zwischen dem Fußteil 136 und der inneren Oberfläche des Wandbereiches 132 sehr klein sind, unter Umständen noch kleiner als im Falle der etwa plattenförmigen Fußteile 36 der Ausführungsform gemäß den Figuren 1 - 6, so daß demzufolge auch die Wandbereiche, die durch das Reaktionsgas unbehandelt bleiben, sehr klein sind, so daß, selbst dann, wenn über das Fußteil 132, das normalerweise ebenfalls aus thermoplastischem Kunststoff besteht, Kohlenwasserstoffe in diese Wandteile eindringen, die dadurch bewirkten Veränderungen, insbesondere Quellen dieser Wandteile, nicht ins Gewicht fallen.

Die Vorsprünge 151, 152 am Fußteil 136 haben ebenfalls die Funktion, den Zusatzkörper 126 in seiner ersten Position an der Halterung 124 gegen ungewolltes Verschieben zu sichern. Entsprechendes gilt auch für die Vorsprünge 160, die beim Zusammenbau von Halterung 124 und Zusatzkörper 126 ggf. zunächst in eine Position gebracht werden, die es erlaubt, das Fußteil 136 durch die im Boden 134 des Zusatzkörpers 126 befindliche Durchbrechung 135 hindurchzuführen. Bei dieser Ausführungsform bilden die Begrenzungen der im Boden 134 befindlichen sternförmigen Durchbrechung 135 das Führungsmittel während der Verschiebung des Zusatzkörpers 126 von seiner in Fig. 7 der Zeichnung dargestellten ersten Position in seine zweite Position.

Die Figuren 9 und 10 zeigen eine dritte Ausführungsform, bei welcher der Ausführungsform 1 - 6 entsprechende Teile mit gleichen, jedoch um 200 höheren Bezugszeichen versehen sind. Auch hier ist die mit dem Wandbereich 232 des Hohlkörpers zu verbindende Halterung 224 sternförmig ausgebildet, so daß lediglich die schmalen Stirnflächen 266 des Sterns mit der Wandung verbunden werden und nur entsprechend kleine Abschnitte der Wandung abdecken. Der Zusatzkörper 226 und die Halterung 224 werden in der aus Fig. 9 ersichtlichen Lage einstückig, z.B. im Spritzgießverfahren, hergestellt. Der Übergang 264 des Bodens 234 des Zusatzkörpers 226 zu der den Boden durchdringenden Halterung 224 ist als Soll-Bruchstelle ausgebildet. Letztere tritt in Funktion, wenn nach der Behandlung der inneren Oberfläche 232 der Zusatzkörper mit entsprechendem Kraftaufwand in seine zweite Position an bzw. nahe der Wandung gebracht wird. Die Soll-Bruchstelle ist so ausgebildet und dimensioniert, daß zur Herbeiführung des Bruches eine Kraft ausgeübt werden muß, die größer ist als die Kraft, die für eine ordnungsgemäße Verschweißung des Fußteils 236 mit der Wandung 232 erforderlich ist. Da bei dieser Ausführungsform die Halterung 224 vom Zusatzkörper 226 gehalten wird, solange die aus Halterung 224 und Zusatzkörper 226 bestehende Einheit von dem als Tragelement dienenden Fortsatz 222 gehalten wird, ist der Zusatzkörper 226 mit Fortsätzen 240, 241 versehen, an denen Durchbrechungen 248 bzw. 249 für den Durchgang des stangenartigen Tragelementes 222 angebracht sind.

Fig. 9 der Zeichnung zeigt die Teile in Positionen, die denen der Fig. 3 entsprechen. Auch hier erfolgt, wie bei allen anderen Ausführungsbeispielen, das Andrücken des Fußteils 236 der Halterung 224 gegen den Wandbereich 332 durch eine entsprechende Verdrehung des Dornes 214, die zu einer entsprechenden Verschwenkung des Tragelementes 222 und damit zu der erforderlichen Verschiebung der aus Halterung 224 und Zusatzkörper 226 bestehenden Einheit führt.

Selbstverständlich sind auch andere Ausgestaltungen und/oder Bewegungsabläufe insbesondere des Tragelementes 22, 122, 222 möglich, um die aus Halterung und Zusatzkörper bestehende Einheit aus der Position gemäß Fig. 2 in die der Fig. 3 zu bringen. So ist es möglich, das Tragelement in einer parallel zur Achse des Dorns verlaufenden Ebene schwenkbar am Dorn anzubringen oder das Tragelement linear entlang einem Durchmesser des Dornes an diesem zu verschieben. Es ist auch möglich, das Tragelement an einem anderen Bauteil, also beispielsweise einem Dorn, anzubringen, der nicht der Zuführung eines gasförmigen Mediums dient.

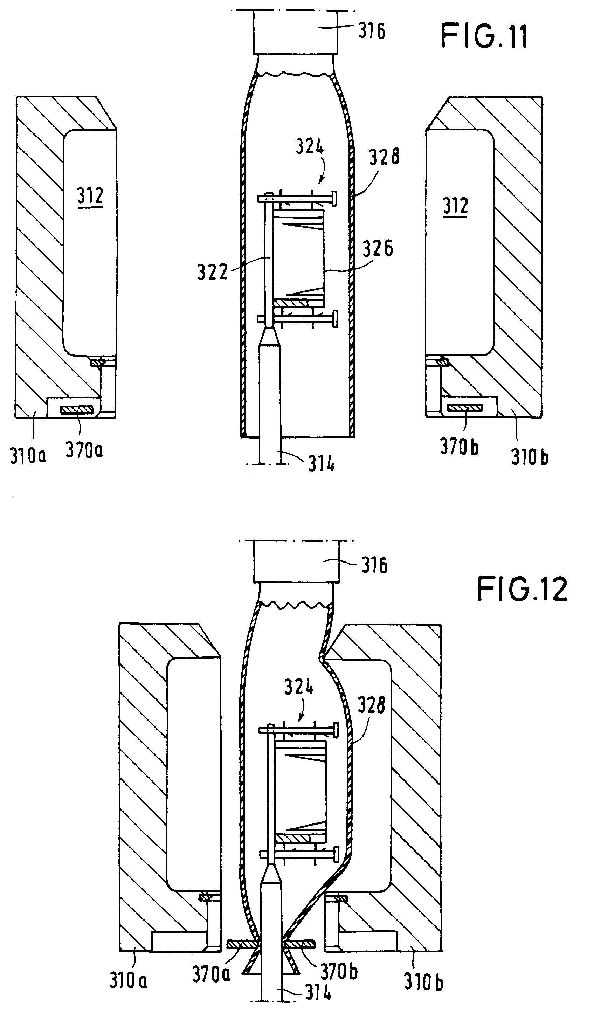

Der Verfahrensablauf beim Ausführungsbeispiel gemäß den Fig. 11 - 14 entspricht in wesentlichen Teilen dem Verfahrensablauf bei den vorstehend beschriebenen Ausführungsbeispielen, so daß gleiche Teile auch mit gleichen, gegenüber den Bezugszeichen des Ausführungsbeispiels gemäß den Fig. 1 - 3 jedoch um 300 höheren Bezugszeichen versehen sind.

Bezüglich der Vorrichtung besteht ein wesentlicher Unterschied darin, daß der Dorn 314, der ebenfalls mit in der Zeichnung nicht dargestellten Kanälen für die Zuführung eines Druckmediums bzw. die Zuführung des Reaktionsgases versehen ist, einen stangenartigen Fortsatz 322 trägt, der zentrisch angeordnet sein kann. Bei dieser Ausführungsform braucht der Fortsatz 322 keine Schwenkbewegung um die Längsachse des Dornes 314 auszuführen, um die Halterung 324 und den von ihr getragenen Zusatzkörper 326 mit der Wandung des Hohlkörpers zu verbinden. Vielmehr wird die Verbindung zwischen Halterung 324 und der Wandung des Hohlkörpers durch die Schließbewegung des Blasformteiles 310b bewirkt. Dazu ist der Fortsatz 322 so angeordnet, daß die Halterung 324 eine Position einnimmt, bei welcher die Fußteile 336 zumindest in der Endphase der Schließbewegung des Blaformteiles 310b mit der Wandung des Hohlkörpers 330 in Berührung kommen und so fest gegen die Wandung gedrückt werden, daß eine ausreichend feste Verbindung zustande kommt. Die Blasformteile 310a, 310b sind unterschiedlich, da die Blasform 310 nicht hälftig unterteilt ist. Ein weiterer Unterschied gegenüber der Vorrichtung gemäß den Fig. 1 - 3 besteht darin, daß zusätzlich im unteren Bereich der Blasform 310 Klemmbacken 370a, 370b vorgesehen sind, von denen die Klemmbacke 370a dem Blasformteil 310a und die Klemmbacke 370b dem Blasformteil 310b zugeordnet ist. Beide Klemmbacken 370a, 370b sind unabhängig von den Blasformteilen 310a, 310b bewegbar. Die Antriebsmittel für die Klemmbacken sind aus Gründen der Übersichtlichkeit in der Zeichnung nicht dargestellt. Schließlich ist die Vorrichtung des Ausführungsbeispiels gemäß den Fig. 11 - 14 mit einem zusätzlichen Transportmittel 316 versehen, durch welches der Vorformling 328 von dem in den Fig. 11 - 14 nicht dargestellten Extrusionskopf abgenommen, gehalten und in die offene Blasform 310 transportiert wird. Ein solches zusätzliches Transportmittel wird z. B. dann verwendet, wenn die Blasform stationär angeordnete ist und der Vorformling aus dem Extrusionskopf kontinuierlich extrudiert wird. Derartige Transport- und Haltemittel für den Vorformling sind Stand der Technik. Sie können beispielsweise als Greifer, aber auch in anderer Weise ausgebildet sein. Da ihre Ausgestaltung mit der vorliegenden Erfindung nichts zu tun hat, ist das Transportmittel 316 in der Zeichnung lediglich angedeutet.

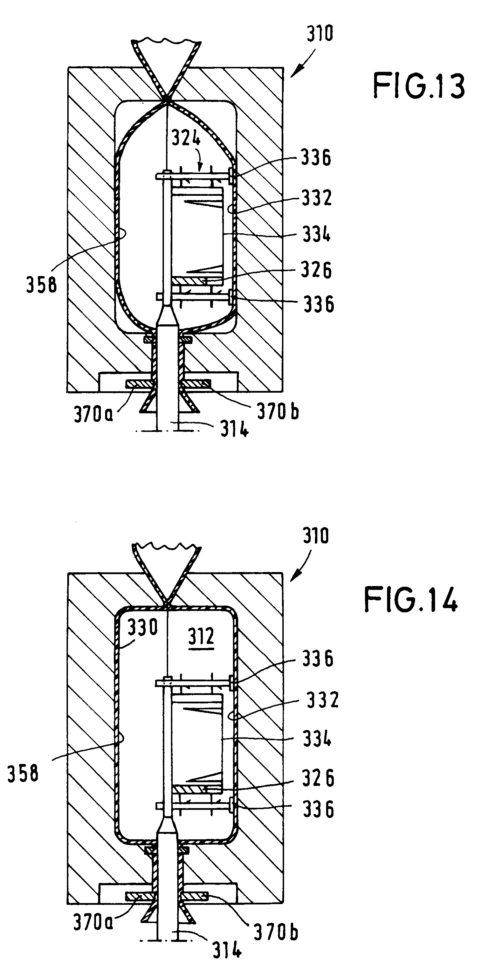

Aus der Ausgangsstellung gemäß Fig. 11, welcher jener gemäß Fig. 1 entspricht, werden die Blasformteile 310a, 310b, nachdem der Vorformling 328 durch das Transportmittel 316 in die richtige Lage zwischen den Blasformteilen 310a, 319b der geöffneten Blasform 310 gebracht worden ist, in der jeweiligen Schließrichtung bewegt, wobei die Klemmbacken 370a, 370b voreilen und gemäß der Darstellung der Fig. 12 den Vorformling 328 nahe seinem unteren Ende gegen den Dorn 314 drücken und an diesem zur Anlage bringen, so daß der oberhalb der ihre Schließposition einnehmenden Klemmbacken 370a, 370b befindliche Abschnitt des Vorformlings 328 unten bereits verschlossen ist, bevor die Blasformteile 310a, 310b ihre Schließstellung erreicht haben. Damit besteht die Möglichkeit, durch ein Druckmedium, welches durch den Dorn 314 zugeführt wird, bereits vor dem Schließen der Blasform den Vorformling teilweise aufzuweiten. Eine erste Phase dieses Aufweitvorganges ist in Fig. 12 dargestellt. Im Verlauf der weiteren Schließbewegung der Blasformteile 310a, 310b wird der Wandbereich 332 durch die Wandung des Blasformteiles 310b gegen die Fußteile 336 der vom dabei nicht bewegten Dorn 314 getragenen Halterung 324 gedrückt, wobei der Druck ausreicht, um bei der anschließenden Verfestigung des den Hohlkörper bildenden Materials eine dauerhafte Schweißverbindung zwischen den Fußteilen 336 der Halterung 324 und dem Wandbereich 332 des Hohlkörpers herbeizuführen. Das Verfahrensstadium, bei welchem die Fußteile 336 mit dem Wandbereich 332 in Berührung sind, ist in Fig. 13 dargestellt. Die Blasform 310 ist vollständig geschlossen. Das Aufweiten des Vorformlings 328 zum Hohlkörper 330 ist zu diesem Zeitpunkt bereits weitgehend abgeschlossen, so daß im folgenden Verfahrensabschnitt nur noch die beiden oben und unten befindlichen Endbereiche des Vorformlings bis zur Anlage an der Blasform aufzuweiten sind. Tatsächlich wird bei dieser Verfahrensvariante, bei welcher das Aufweiten des Vorformlings 328 bereits beginnt, bevor die Blasform 310 völlig geschlossen ist, eher ein Umformen des Vorformlings stattfinden, da ggf. der Vorformling vor dem endgültigen Schließen der Blasform zumindest in Teilbereichen stärker aufgeweitet sein kann als dies der Querschnittsform des fertigen Hohlkörpers 330 entspricht, so daß durch das Schließen der Blasformteile der Vorformling 328 in seinem mittleren Bereich unter Umständen sogar eine Querschnittsverengung erfährt. Jedenfalls setzt das Herstellen der Verbindung zwischen Halterung 324 und Wandung des Hohlkörpers 330 voraus, daß dabei der Wandbereich 332, also jener Wandbereich, an welchem die Verbindung mit der Halterung 324 hergestellt wird, an der Wandung der Blasform 310, d.h., genauer gesagt, an der Wandung des Blasformteils 310b anliegt, durch dessen Schließbewegung der Druck zum Herstellen der Verbindung zwischen Halterung und Hohlkörperwandung aufgebracht wird.

Fig. 14 zeigt den Zustand in einem Verfahrensstadium, in welchem sämtliche Wandbereiche, also auch jene, die mit der Halterung 324 nicht in Berührung sind, an der Blasformwandung anliegen.

Nach Durchführung der Behandlung der inneren Oberfläche des Hohlkörpers mit dem Reaktionsmedium wird der Zusatzkörper 326 in der bereits im Zusammenhang mit den anderen Ausführungsbeispielen beschriebenen Weise in die Position gemäß Fig. 5 verschoben.

Allen Ausführungen ist gemeinsam, daß der Wandbereich des Hohlkörpers, der zur Herstellung einer ausreichend festen Verbindung mit der Halterung von Flächen derselben abgedeckt wird, sehr klein ist, so daß die einleitend beschriebenen nachteiligen Folgen durch Eindringen von Kohlenwasserstoffen in diese Teilbereiche der Wandung nicht mehr ins Gewicht fallen.

Der für die Halterung notwendige Mehraufwand an Material ist vernachlässigbar gering. Auch die Tatsache, daß die Halterung zusätzlich zum Zusatzkörper im Hohlkörper nach dessen Fertigstellung verbleibt, stellt keinen Nachteil dar.

Wenn vorstehend als Behandlungsmedium für die Oberflächenbehandlung zur Erzielung einer verringerten Permeabilität für Kohlenwasserstoffe - oder für andere Substanzen - überwiegend Fluor genannt wird, soll dies die Verwendung anderer Behandlungsmedien nicht ausschließen. So kann die Oberflächenbehandlung auch durch Sulfonieren erfolgen.

## Patentansprüche

1. Verfahren zum Herstellen von Hohlkörpern (30; 330) aus thermoplastischem Kunststoff durch Blasformen, bei welchem ein vorzugsweise schlauchförmiger Vorformling (28; 328) gebildet und innerhalb einer Blasform (10; 310) durch inneren Überdruck bis zur Anlage an der Wandung der Blasform aufgeweitet wird und ein Zusatzkörper (26; 126; 226; 326) in den mit wenigstens einer Öffnung versehenen Vorformling (28; 328) eingebracht und an der inneren Oberfläche der Wandung des aufgeweiteten Hohlkörpers (30; 330) angebracht wird und wenigstens Teilbereiche der Oberfläche mit wenigstens einem Medium behandelt werden, welches Bestandteil eines Gemisches sein kann und mit dem die zu behandelnden Bereiche der Hohlkörperwandung bildenden Kunststoff reagiert, um die physikalischen und/oder chemischen Eigenschaften der behandelten Bereiche zu verändern, dadurch gekennzeichnet, daß der Zusatzkörper (26; 126; 226; 326) mit einer Halterung (24; 124; 224; 324) in den Vorformling (28; 328) eingebracht wird und vor der Behandlung des Hohlkörpers (30; 330) mit dem Reaktionsmedium die Halterung (24; 124; 224; 324) mit der Wandung des Hohlkörpers verbunden wird, wobei der Zusatzkörper (26; 126; 226; 326) zunächst in einer ersten Position gehalten wird, in welcher er sich in einem Abstand von dem Wandbereich (32; 132; 232; 332) des Hohlkörpers (30; 330) befindet, mit welchem er zu verbinden ist, und der Abstand groß genug gewählt ist, um dem Behandlungsmedium im wesentlichen ungehinderten Zutritt zu dem Bereich zwischen Zusatzkörper (26; 126; 226; 326) und Wandung des Hohlkörpers (30; 330) zu ermöglichen, und nach ausreichender Einwirkzeit des Behandlungsmediums der Zusatzkörper (26; 126; 226; 326) relativ zur Halterung (24; 124; 224; 324) in eine zweite Position verschoben wird, in welcher er sich in einem geringeren Abstand von oder in Anlage an den Wandbereich (32; 132; 232; 332) des Hohlkörpers befindet, mit dem die Halterung (24; 124; 224; 324) verbunden worden ist, und die Kontaktfläche(n) zwischen der Halterung (24; 124; 224; 324) und der inneren Oberfläche der Wandung des Hohlkörpers (30; 330) wesentlich kleiner ist bzw. sind als die Projektion des Zusatzkörpers (26; 126; 226; 326) auf den Bereich der Wandung des Hohlkörpers (30; 330), in welchem die Halterung angebracht ist.

2. Verfahren nach Anspruch 1, dadurch gekennzeichnet, daß ein Zusatzkörper (26; 126; 226; 326) verwendet wird, der topfartig ausgebildet ist.

3. Verfahren nach Anspruch 2, dadurch gekennzeichnet, daß ein Zusatzkörper (26; 126; 226; 326) verwendet wird, der mit seinem Boden (34; 134; 234; 334) dem Bereich (32; 132; 232; 332) der Wandung des Hohlkörpers zugekehrt ist, an dem die Halterung (24; 124; 224; 324) angebracht ist.

4. Verfahren nach Anspruch 1, dadurch gekennzeichnet, daß die Verschiebung des Zusatzkörpers (26; 126; 226; 326) aus seiner ersten Position in die zweite Position an der Halterung (24; 124; 224; 324) durchgeführt wird, nachdem die Wandung des Hohlkörpers (30; 330) mit einer zusätzlichen Öffnung versehen worden ist.

5. Verfahren nach Anspruch 1, dadurch gekennzeichnet, daß die Verschiebung des Zusatzkörpers (26; 126; 226; 326) aus seiner ersten Position in seine zweite Position im wesentlichen senkrecht zum Verlauf des Bereichs (32; 132; 232; 332) der Wandung des Hohlkörpers (30; 330) erfolgt, mit dem die Halterung (24; 124; 224; 324) verbunden worden ist.

6. Verfahren nach Anspruch 1, dadurch gekennzeichnet, daß der Zusatzkörper (226) in seiner ersten Position mit der ihn tragenden Halterung (224) über wenigstens eine Sollbruchstelle (264) fest verbunden ist, die beim Verschieben des Zusatzkörpers (226) von der ersten in die zweite Position durchtrennt wird.

7. Verfahren nach Anspruch 1, dadurch gekennzeichnet, daß der Zusatzkörper (26; 126) in seiner ersten Position relativ zur Halterung durch wenigstens einen Anschlag (51, 52; 151, 152) gehalten wird, dessen Sperrwirkung bei der Verschiebung von der ersten Position in die zweite Position durch elastische Verformung des wenigstens einen Anschlags (51, 52; 151, 152) und/oder wenigstens eines damit zusammenwirkenden Teils (40, 41; 140, 141) überwunden wird.

8. Verfahren nach Anspruch 1, dadurch gekennzeichnet, daß der Zusatzkörper (26; 126; 226) in seiner zweiten Position durch wenigstens einen Anschlag (60; 160; 260) gehalten wird, der bei der Verschiebung entlang der Halterung aus der ersten Position in die zweite Position eine elastische Verformung erfahren hat.

9. Verfahren nach Anspruch 1, dadurch gekennzeichnet, daß der Zusatzkörper (26, 126, 226) mit wenigstens einem Führungsmittel (40, 41; 135; 235) versehen ist, das einen Formschluß zwischen Zusatzkörper und Halterung (24; 124; 224) bewirkt und Teile der Halterung umgreift.

10. Verfahren nach Anspruch 9, dadurch gekennzeichnet, daß die Halterung (24; 124; 324) wenigstens zwei Ständer (44, 45; 144, 145) aufweist und der Zusatzkörper (26; 126; 326) parallel zu diesen Ständern aus seiner ersten Position in seine zweite Position verschoben wird.

11. Verfahren nach Anspruch 9, dadurch gekennzeichnet, daß die Ständer (44, 45) jeweils wenigstens eine am Zusatzkörper (26) befindliche Öffnung (42) durchgreifen.

12. Verfahren nach Anspruch 11, dadurch gekennzeichnet, daß die Ständer (44, 45) der Halterung (24) außerhalb des Zusatzkörpers (26) angeordnet und die Öffnungen (42) an außenseitig am Zusatzkörper (26) angebrachten Fortsätzen (40, 41) angeordnet sind.

13. Verfahren nach Anspruch 9, dadurch gekennzeichnet, daß der Zusatzkörper (126; 226) an seinem Boden (34; 134) mit wenigstens einer Öffnung versehen ist, deren Begrenzung(en) als Führungsmittel an der Halterung (124; 224) dient bzw. dienen.

14. Verfahren nach Anspruch 9 und 13, dadurch gekennzeichnet, daß die wenigstens zwei Ständer (145) der Halterung innerhalb des topfartig ausgebildeten Zusatzkörpers angeordnet sind und wenigstens ein Fußteil (136) tragen, das die im Boden (134) des Zusatzkörpers (136) vorhandene wenigstens eine Öffnung durchgreift und mit der Wandung des Hohlkörpers verbunden wird.

15. Verfahren nach Anspruch 13, dadurch gekennzeichnet, daß der mit der Wandung des Hohlkörpers (30) zu verbindende Bereich (136; 236) der Halterung (124, 224) sternförmig ausgebildet und die Öffnung im Boden des Zusatzkörpers (126; 226) entsprechend ausgebildet ist.

16. Verfahren nach Anspruch 1, dadurch gekennzeichnet, daß Halterung (24; 124; 224; 324) und Zusatzkörper (26; 126; 226; 326) während des Aufweitvorganges und bis zur Anbringung der Halterung an der Wandung (32; 132; 232; 332) des Hohlkörpers (30; 330) von einem Tragelement (22; 122; 222: 322) getragen werden, welches durch eine Öffnung des Vorformlings (28; 328) bzw. des daraus hergestellten Hohlkörpers (30; 330) in den Vorformling bzw. den Hohlkörper hineinragt.

17. Verfahren nach Anspruch 16, dadurch gekennzeichnet, daß ein Formschluß zwischen Tragelement (22; 122; 222) einerseits und Halterung (24; 124; 224) bzw. Zusatzkörper (26; 126; 226) andererseits dadurch hergestellt wird, daß das Tragelement mit einem im Querschnitt unrunden Bereich (50; 150, 250) versehen ist, der eine entsprechend begrenzte Durchbrechung (49; 149; 249) an Halterung bzw. Zusatzkörper durchgreift.

18. Verfahren nach Anspruch 16, dadurch gekennzeichnet, daß Halterung (24; 124; 224) und Zusatzkörper (26; 126; 226) durch eine Bewegung des vorteilhaft stangenartigen Tragelementes (22; 122; 222) aus einer ersten Position, in welcher Halterung und Zusatzkörper ohne Berührung mit dem Vorformling (28) bzw. dem daraus hergestellten Hohlkörper (30) sind, in eine zweite Position gebracht werden, in welcher die Halterung mit der Wandung des Hohlkörpers verbunden ist, und die Herstellung der Verbindung im Verlauf der Bewegung erfolgt.

19. Verfahren nach Anspruch 1, dadurch gekennzeichnet, daß die Halterung (324) im Verlauf der Schließbewegung der Blasform (310) mit der Wandung des Hohlkörpers verbunden wird.

20. Verfahren nach Anspruch 1, dadurch gekennzeichnet, daß die aus thermoplastischem Kunststoff bestehende Halterung (24; 124; 224; 324) mit der Wandung des Hohlkörpers (30; 330) durch Schweißen verbunden wird.

21. Verfahren nach Anspruch 16 oder 19, dadurch gekennzeichnet, daß das stangenartige Tragelement (222) wenigstens eine ösenartige Durchbrechung (248, 249) durchgreift, die am Zusatzkörper (226) angebracht sind.

22. Verfahren nach Anspruch 16 oder 19, dadurch gekennzeichnet, daß das stangenartige Tragelement (22; 122) wenigstens eine ösenartige Durchbrechung (48, 49; 148, 149) durchgreift, die an der Halterung (24; 124) angebracht sind.

23. Verfahren nach Anspruch 1, dadurch gekennzeichnet, daß die Behandlung von wenigstens Teilbereichen der inneren Oberfläche der Wandung des aufgeweiteten Hohlkörpers (30; 330) mit dem Medium innerhalb der Blasform (10; 310) erfolgt.

24. Verfahren nach Anspruch 1, dadurch gekennzeichnet, daß die Behandlung von wenigstens Teilbereichen der inneren Oberfläche der Wandung des aufgeweiteten Hohlkörpers (30; 330) mit dem Medium durchgeführt wird, nachdem der Hohlkörper (30; 330) aus der Blasform (10; 310) entfernt worden ist.

25. Verfahren nach Anspruch 24, dadurch gekennzeichnet, daß die innere Oberfläche der Wandung des Hohlkörpers (10; 310) zumindest in den mit dem Medium zu behandelnden Teilbereichen vor der Behandlung erwärmt wird.

26. Verfahren nach Anspruch 1, dadurch gekennzeichnet, daß der Zusatzkörper (26; 126; 226; 326) in seine zweite Position verschoben wird, solange sich der Hohlkörper (30; 330) noch in der Blasform (10; 310) befindet.

27. Verfahren nach Anspruch 1, dadurch gekennzeichnet, daß der Zusatzkörper (26; 126; 226; 326) in seine zweite Position verschoben wird, nachdem der Hohlkörper (30; 330) aus der Blasform (10; 310) entfernt worden ist.

28. Im Blasverfahren aus thermoplastischem Kunststoff hergestellter Hohlkörper, dessen innere Oberfläche zumindest in Teilbereichen mit einem Reaktionsgas behandelt worden ist, wobei innerhalb des Hohlkörpers an dessen Wandung ein Zusatzkörper angebracht ist, dadurch gekennzeichnet, daß der Zusatzkörper (26; 126; 226; 326) von einer Halterung (24; 124; 224; 324) getragen ist, die mit der Wandung des Hohlkörpers in Bereichen der Wandung verbunden ist, die keine Behandlung durch das Reaktionsgas erfahren haben.

29. Hohlkörper nach Anspruch 28, dadurch gekennzeichnet, daß seine Wandung zumindest überwiegend aus einem Polyolefin besteht.

30. Hohlkörper nach Anspruch 28, dadurch gekennzeichnet, daß die Halterung (24; 124; 224; 324) durch eine Schweißverbindung an der Wandung des Hohlkörpers (30; 330) angebracht ist.

31. Hohlkörper nach Anspruch 28, dadurch gekennzeichnet, daß der Zusatzkörper (26; 126; 226; 326) topfartig ausgebildet und mit seinem Boden (34; 134; 234; 334) an der inneren Oberfläche der Wandung des Behälters (30; 330) anliegt bzw. sich nur in einem ganz geringen Abstand von dieser Wandung befindet.

32. Hohlkörper nach Anspruch 28, dadurch gekennzeichnet, daß er als Kraftfahrzeug-Tank und daß der Zusatzkörper (26; 126; 226; 326) als Schwalltopf ausgebildet ist.

## Claims

1. A process for the production of hollow bodies (30; 330) of thermoplastic material by blow moulding, in which a preferably tubular preform (28; 328) is formed and expanded within a blow moulding mould (10; 310) by increased internal pressure until it bears against the wall of the blow moulding mould and an additional body (26; 126; 226; 326) is introduced Into the preform provided with at least one opening and is applied against the Inside surface of the wall of the ended hollow body (30; 330) and at least portions of the surface are treated with at least one medium which can be a constituent of a mixture and which reacts with the plastics material forming the regions of the wall of the hollow body which is to be treated in order to change the physical and/or chemical properties of the regions treated, characterised in that the additional body (26; 126; 226; 326) is introduced with a holding means (24; 124; 224; 324) into the preform (28; 328) and prior to the treatment of the hollow body (30; 330) with the reaction medium the holding means (24; 124; 224; 324) is connected to the wall of the hollow body, wherein the additional body (26; 126; 226; 326) is firstly held in a first position in which it is at a spacing from the wall region (32; 132; 232; 332) of the hollow body (30; 330) to which it is to be connected and the spacing is selected to be large enough to permit substantially unimpeded access for the treatment medium to the region between the additional body (26; 126; 226; 326) and the wall of the hollow body (30; 330) and after a sufficient period of action of the treatment medium the additional body (26; 126; 226; 326) is displaced relative to the holding means (24; 124; 224; 324) into a second position in which it is at a smaller spacing from or in a condition of bearing against the wall region (32; 132; 232; 332) of the hollow body to which the holding means (24; 124; 224; 324) has been connected, and the contact surface area or areas between the holding means (24; 124; 224; 324) and the inside surface of the wall of the hollow body (30; 330) is or are substantially smaller than the projection of the additional body (26; 126; 226; 326) on to the region of the wall of the hollow body (30; 130) in which the holding means is disposed.

2. A process according to claim 1 characterised in that an additional body (26; 126; 226; 326) which is of a pot-like configuration is used.

3. A process according to claim 2 characterised in that an additional body (26; 126; 226; 326) is used which is disposed with its bottom (34; 124; 234; 334) towards the region (32; 132; 232; 332) of the wall of the hollow body to which the holding means (24; 124; 224; 324) is mounted.

4. A process according to claim 1 characterised in that displacement of the additional body (26; 126; 226; 326) from its first position into the second position on the holding means (24; 124; 224; 324) is effected after the wall of the hollow body has been provided with an additional opening.

5. A process according to claim 1 characterised in that displacement of the additional body (26; 126; 226; 326) from its first position into its second position is effected substantially perpendicularly to the configuration of the region (32; 132; 232; 332) of the wall of the hollow body (30; 330) to which the holding means (24; 124; 224; 324) has been connected.

6. A process according to claim 1 characterised in that in its first position the additional body (226) is fixedly connected to the holding means (224) carrying same by way of at least one desired-rupture location (264) which is severed upon displacement of the additional body (226) from the first position into the second position.

7. A process according to claim 1 characterised in that the additional body (26; 126) is held in its first position relative to the holding means by at least one abutment (51, 52; 151, 152) whose locking effect is overcome upon displacement from the first position into the second position by elastic deformation of the at least one abutment (51, 52; 151, 152) and/or at least one portion (40, 41; 140, 141) co-operating therewith.

8. A process according to claim 1 characterised in that the additional body (26; 126; 226) is held In its second position by at least one abutment (60; 160; 260) which has experienced elastic deformation upon displacement along the holding means from the first position into the second position.

9. A process according to claim 1 characterised in that the additional body (26, 126, 226) is provided with at least one guide means (40, 41; 135; 235) which provides a positively locking join between the additional body and the holding means (24; 124; 224) and embraces portions of the holding means.

10. A process according to claim 9 characterised in that the holding means (24; 124; 324) has at least two supports (44, 45; 144, 145) and the additional body (26; 126; 326) is displaceable parallel to said supports from its first position into its second position.

11. A process according to claim 9 characterised in that the supports (44, 45) each engage through at least one opening (42) on the additional body (26).

12. A process according to claim 11 characterised in that the supports (44, 45) of the holding means (24) are arranged outside the additional body (26) and the openings (42) are disposed on extensions (40, 41) disposed on the additional body (26) on the outside thereof.

13. A process according to claim 9 characterised in that at its bottom (34; 134) the additional body (126; 226) is provided with at least one opening whose boundary or boundaries serves or serve as guide means on the holding means (124; 224).

14. A process according to claim 9 and claim 13 characterised In that the at least two supports (145) of the holding means are disposed within the additional body of a cup-like configuration and carry at least one base portion (136) which engages through the at least one opening in the bottom (134) of the additional body (136) and is connected to the wall of the hollow body.

15. A process according to claim 13 characterised in that the region (136; 236) of the holding means (124; 224), which is to be connected to the wall of the hollow body (30), is of a star-like configuration and the opening In the bottom of the additional body (126; 226) is of a corresponding configuration.

16. A process according to claim 1 characterised in that the holding means (24; 124; 224; 324) and the additional body (26; 126; 226; 326) are carried by a support element (22; 122; 222; 322) during the expansion operation and until the holding means is mounted to the wall (32; 132; 232; 332) of the hollow body (30; 330), which support element projects through an opening in the preform (28; 328) or the hollow body (30; 330) produced therefrom into the preform or the hollow body respectively.

17. A process according to claim 16 characterised in that a positively locking connection between the support element (22; 122; 222) on the one hand and the holding means (24; 124; 224) or the additional body (26; 126; 226) on the other hand is produced by the support element being provided with a region (50; 150, 250) of non-round cross-section, which engages through a correspondingly defined orifice (49; 149; 249) on the holding means or additional body respectively.

18. A process according to claim 16 characterised in that the holding means (24; 124; 224) and the additional body (26; 126; 226) are moved by a movement of the support element (22; 122; 222) which is advantageously rod-like from a first position in which the holding means and the additional body are without contact with the preform (28) or the hollow body (30) produced therefrom into a second position in which the holding means is connected to the wall of the hollow body, and the connection is produced in the course of the movement.

19. A process according to claim 1 characterised in that the holding means (324) is connected to the wall of the hollow body in the course of the closing movement of the blow moulding mould (310).

20. A process according to claim 1 characterised in that the holding means (24; 124; 224; 324) comprising thermoplastic material is connected to the wall of the hollow body (30; 330) by welding.

21. A process according to claim 16 or claim 19 characterised in that the rod-like support element (222) engages through at least one eye-like orifice (248, 249) on the additional body (226).

22. A process according to claim 16 or claim 19 characterised in that the rod-like support element (22; 122) engages through at least one eye-like orifice (48, 49; 148, 149) on the holding means (24; 124).

23. A process according to claim 1 characterised in that the treatment of at least portions of the inside surface of the wall of the expanded hollow body (30; 330) with the medium is effected within the blow moulding mould (10; 310).

24. A process according to claim 1 characterised in that the treatment of at least portions of the inside surface of the wall of the expanded hollow body (30; 330) with the medium is effected after the hollow body (30; 330) has been removed from the blow moulding mould (10; 310).

25. A process according to claim 24 characterised in that the Inside surface of the wall of the hollow body (10; 310) is heated prior to the treatment at least in the regions which are to be treated with the medium.

26. A process according to claim 1 characterised in that the additional body (26; 126; 226; 326) is displaced into its second position as long as the hollow body (30, 330) is still in the blow moulding mould (10; 310).

27. A process according to claim 1 characterised in that the additional body (26; 126; 226; 326) is displaced into its second position after the hollow body (30; 330) has been removed from the blow moulding mould (10; 310).

28. A hollow body which is produced from thermoplastics material by a blow moulding process and whose inside surface has been treated at least in regions with a reaction gas, wherein disposed within the hollow body on the wall thereof is an additional body, characterised in that the additional body (26; 126; 226; 326) is carried by a holding means (24; 124; 224; 324) which is connected to the wall of the hollow body in regions of the wall which have not been subjected to treatment by the reaction gas.

29. A hollow body according to claim 28 characterised in that its wall at least predominantly comprises a polyolefin.

30. A hollow body according to claim 28 characterised in that the holding means (24; 124; 224; 324) is mounted to the wall of the hollow body (30; 330) by a weld connection.

31. A hollow body according to claim 28 characterised in that the additional body (26; 126; 226; 326) is of a pot-like configuration and bears with its bottom (34; 134, 234; 334) against the inside surface of the wall of the container (30; 330) or is disposed only at a very small spacing from said wall.

32. A hollow body according to claim 28 characterised in that it is in the form of a motor vehicle tank and that the additional body (26; 126; 226; 326) is in the form of a surge pot.

## Revendications

1. Procédé pour fabriquer des corps creux (30;330) en matière thermoplastique moulée par soufflage, en réalisant une ébauche de moulage (28;328) de préférence tubulaire que l'on transforme par expansion par un effet de surpression interne dans un moule de soufflage (10;310), pour appliquer la paroi de l'ébauche contre la paroi du moule, après quoi on introduit un corps annexe (26;126;226;326) dans l'ébauche (28;328) pourvue d'au moins une ouverture, en plaçant ce corps annexe contre la face interne de la paroi du corps creux obtenu par expansion (30;330), après avoir traité au moins certaines zones de cette face interne avec au moins un agent qui peut être un composant d'un mélange adapté à réagir avec la matière plastique des zones à traiter sur la paroi du corps creux, cette réaction étant destinée à modifier les propriétés physiques et/ou chimiques des zones ainsi traitées, caractérisé en ce qu'on introduit le corps annexe (26;126;226;326) dans l'ébauche (28;328) au moyen d'une monture (24;124;224;324), et en ce qu'on fixe cette monture sur la paroi du corps creux (30;330) avant de traiter la paroi de celui-ci avec l'agent réactif, en ce qu'on opère de manière à maintenir d'abord le corps annexe (26;126;226;326) dans une première position, où le corps annexe est écarté d'une certaine distance de la zone de la paroi (32;132;232;332) du corps creux où l'on veut le fixer, cet écartement étant suffisant pour permettre à l'agent réactif de pénétrer pratiquement sans difficulté dans l'intervalle entre le corps annexe (26;126;226;326) et la paroi du corps creux (30;330), en ce qu'ensuite, au bout d'une durée suffisante de l'effet de l'agent réactif, on déplace le corps annexe par rapport à sa monture (24;124;224;324), pour l'amener dans une deuxième position où il se trouve rapproché de la zone concernée de la paroi (32;132; 232;332) du corps creux, ou même appliqué contre cette paroi à laquelle on a fixé la monture (24;124;224;324), et en ce que la plage de contact éventuellement multiple, entre la monture (24;124;224;324) et la face interne de la paroi du corps creux (30; 330), présente une surface beaucoup plus faible que la projection du corps annexe (26;126;226;326) sur la zone de la paroi du corps creux (30;330) où se trouve fixée la monture.

2. Procédé selon la revendication 1, caractérisé en ce qu'on utilise un corps annexe (26;126;226;326) ayant la forme d'un pot.

3. Procédé selon la revendication 2, caractérisé en ce qu'on utilise un corps annexe (26;126;226;326) dont le fond (34;134;234;334) est dirigé vers la zone (32; 132;232;332) de la paroi du corps creux où est fixée la monture (24;124;224;324).

4. Procédé selon la revendication 1, caractérisé en ce qu'on effectue le déplacement du corps annexe (26;126;226;326), pour le faire passer de sa première position à sa deuxième position sur sa monture (24;124;224;324), après avoir pratiqué une ouverture supplémentaire dans la paroi du corps creux (30;330).

5. Procédé selon la revendication 1, caractérisé en ce qu'on effectue le déplacement du corps annexe (26;126;226;326) pour le faire passer de sa première position à sa deuxième position, dans une direction sensiblement perpendiculaire à la zone (32;132;232;332) de la paroi du corps creux (30;330) où l'on a fixé la monture (24;124;224;324).

6. Procédé selon la revendication 1, caractérisé en ce qu'on fixe provisoirement le corps annexe (226) dans sa première position sur sa monture (224) par au moins une attache fragile (264) destinée à être brisée lorsqu'on déplace ensuite le corps annexe (226) de sa première à sa deuxième position.

7. Procédé selon la revendication 1, caractérisé en ce qu'on fixe provisoirement le corps annexe (26;126) dans sa première position sur sa monture, au moyen d'au moins une butée (51,52;151,152) destinée à céder lors du déplacement du corps annexe de sa première à sa deuxième position, grâce à une déformation élastique de chaque butée (51,52;151;152) et'ou d'une pièce associée (40,41;140,141).

8. Procédé selon la revendication 1, caractérisé en ce qu'on maintient le corps annexe (26;126;226) dans sa deuxième position au moyen d'une butée (60;160; 260) qui a subi une déformation par élasticité au cours du déplacement du corps annexe sur sa monture pour passer de sa première à sa deuxième position.

9. Procédé selon la revendication 1, caractérisé en ce que le corps annexe (26;126;226) est pourvu d'au moins un organe de guidage (40,41;135;235) dont la forme est prévue pour assurer une liaison entre le corps annexe et sa monture (24; 124;224), en entourant des parties de la monture.

10. Procédé selon la revendication 9, caractérisé en ce que la monture (24; 124;324) comporte au moins deux organes de soutien (44,45;144,145), et en ce qu'on fait coulisser le corps annexe (26;126;326) parallèlement à ces organes de soutien, pour le faire passer de sa première à sa deuxième position.

11. Procédé selon la revendication 9, caractérisé en ce que chacun des organes de soutien (44,45) passe dans au moins une ouverture (42) prévue sur le corps annexe (26).

12. Procédé selon la revendication 11, caractérisé en ce que les organes de soutien (44,45) de la monture (24) sont disposés à l'extérieur du corps annexe (26), et en ce que les ouvertures (42) prévues pour le passage des organes de soutien sont ménagées dans des appendices (40,41) du corps annexe (26), à l'extérieur de celui-ci.

13. Procédé selon la revendication 9, caractérisé en ce que le corps annexe (126;226) comporte à l'endroit de son fond (134;234) au moins une ouverture dont le bord sert d'organe de guidage sur la monture (124;224).

14. Procédé selon la revendication 9 ou 13, caractérisé en ce que les organes de soutien (144,145) de la monture sont disposés à l'intérieur du corps annexe en forme de pot, et comportent au moins un pied (136), qui passe à travers l'ouverture ménagée dans le fond (134) du corps annexe pour se fixer sur la paroi du corps creux.

15. Procédé selon la revendication 13, caractérisé en ce que la partie (136; 236) de la monture (124;224) prévue pour être fixée à la paroi du corps creux (30) est en forme d'étoile, et en ce que l'ouverture ménagée dans le fond du corps annexe (126;226) a une forme correspondante.

16. Procédé selon la revendication 1, caractérisé en ce que la monture (24; 124;224;324) et le corps annexe (26;126;226;326) sont tenus par un support (22;122; 222;322) pendant la phase d'expansion de l'ébauche, et jusqu'au moment de la fixation de la monture sur la paroi (32;132;232;332) du corps creux (30;330), ce support passant par une ouverture de l'ébauche (28;328) qui subsiste sur le corps creux (30; 330) obtenu par transformation de l'ébauche, pour pénétrer en saillie dans l'ébauche et dans le corps creux.

17. Procédé selon la revendication 16, caractérisé en ce qu'on assure, grâce à la forme des parties en présence, une fixation entre le support (22;122;222) et la monture (24;124;224) ou le corps annexe (26;126;226), en prévoyant à cet effet sur le support un doigt d'assemblage de section non circulaire (50;150;250), qui vient s'engager dans un trou de forme correspondante (49;149;249) de la monture ou du corps annexe.

18. Procédé selon la revendication 16, caractérisé en ce qu'on déplace ensemble la monture (24;124;224) et le corps annexe (26;126;226) grâce à un mouvement du support (22;122;222) - qui a de préférence la forme d'une tige - pour amener l'ensemble, d'une première position, où n'existe aucun contact de la monture et du corps annexe avec l'ébauche (28) ou le corps creux (30) obtenu à partir de celle-ci, jusqu'à une deuxième position où la monture vient se fixer sur la paroi du corps creux, cette fixation étant réalisée sous l'effet de ce déplacement.

19. Procédé selon la revendication 1, caractérisé en ce qu'on réalise la fixation de la monture (324) sur la paroi du corps creux pendant la manoeuvre de fermeture du moule de soufflage (310).

20. Procédé selon la revendication 1, caractérisé en ce qu'on fixe par soudage sur la paroi du corps creux (30;330) la monture (24;124;224;324) qui est en matière thermoplastique.

21. Procédé selon la revendication 16 ou 19, caractérisé en ce que le support en forme de tige (222) passe à travers au moins un trou (248,249) prévu à cet effet sur le corps annexe (226).

22. Procédé selon la revendication 16 ou 19, caractérisé en ce que le support en forme de tige (22;122) passe à travers au moins un trou (48,49;148,149) prévu à cet effet sur la monture (24;124).

23. Procédé selon la revendication 1, caractérisé en ce qu'on assure le traitement de chaque zone partielle de la face interne de la paroi du corps creux obtenu par expansion (30;330), en utilisant pour ce traitement le fluide contenu dans le moule de soufflage (10;310).

24. Procédé selon la revendication 1, caractérisé en ce qu'on effectue le traitement de chaque zone partielle de la face interne de la paroi du corps creux obtenu par expansion (30;330), à l'aide du fluide du moule, après l'extraction du corps creux (30;330) hors du moule 10;310).

25. Procédé selon la revendication 24, caractérisé en ce qu'on réchauffe la face interne de la paroi du corps creux (10;310) ,au moins aux endroits prévus pour être traités, en effectuant ce réchauffement avant le traitement.

26. Procédé selon la revendication 1, caractérisé en ce qu'on déplace le corps annexe (26;126;226;326) pour l'amener dans sa deuxième position, alors que le corps creux (30;330) est encore dans le moufle de soufflage (10;310).

27. Procédé selon la revendication 1, caractérisé en ce qu'on déplace le corps annexe (26;126;226;326) pour l'amener dans sa deuxième position, après avoir extrait le corps creux (30;330) hors du moule (10;310).

28. Corps creux en matière thermoplastique moulée par soufflage, dont la paroi a subi au moins en certains endroits de sa face interne un traitement par exposition à un gaz réactif, pour fixer à cette paroi un corps annexe contenu dans le corps creux, caractérisé en ce que le corps annexe (26;126;226;326) est soutenu par une monture (24;124;224;324) qui est fixée à la paroi du corps creux en des endroits qui n'ont pas été traités par le gaz réactif.

29. Corps creux selon la revendication 28, caractérisé en ce qu'il comporte une paroi confectionnée au moins principalement en polyoléfine.

30. Corps creux selon la revendication 28, caractérisé en ce que la monture (24; 124;224;324) est fixée par soudage sur la paroi du corps creux (30;330).

31. Corps creux selon la revendication 28, caractérisé en ce que le corps annexe (26;126;226;326) a la forme d'un pot, dont le fond (34;134;234;334) est appliqué contre la face interne de la paroi du corps creux (30;330), ou n'est séparé de cette paroi que par un très faible interstice.

32. Corps creux selon la revendication 28, caractérisé en ce qu'il constitue un réservoir pour un véhicule automobile, dans lequel le corps annexe (26;126;226;326) constitue un pot d'amortissement.
